# FASCICULE DE BREVET EUROPEEN

(11) **EP 1 339 584 B1**
(45) Date de publication et mention de la délivrance du brevet: **27.02.2008**
(21) Numéro de dépôt: 01997431.0
(22) Date de dépôt: 21.11.2001
(51) Int. Cl.: B60T 13/573

(54) **DISPOSITIF DE FREINAGE ASSISTE, A FONCTIONNEMENT AMELIORE, POUR VEHICULE A MOTEUR.**
BREMSKRAFTVERSTÄRKERVORRICHTUNG MIT VERBESSERTEN BETRIEBSBEDINGUNGEN FÜR KRAFTFAHRZEUG
BRAKE BOOSTER DEVICE, WITH IMPROVED OPERATING CONDITIONS, FOR MOTOR VEHICLE

(30) Priorité: 24.11.2000 FR 0015304
(43) Date de publication de la demande: 03.09.2003
(73) Titulaire: ROBERT BOSCH GMBH, 70442 Stuttgart (DE)
(72) Inventeur: MICHON, Jean-Pierre, F-77178 Saint-Pathus (FR); LACROIX, Stéphane, F-77220 Tournan en Brie (FR)
(74) Mandataire: Hurwic, Aleksander Wiktor
(86) Numéro de dépôt international: PCT/FR2001/003655
(87) Numéro de publication internationale: WO 2002/042140

(56) Documents cités:
- FR-A- 2 658 466
- FR-A- 2 784 953
- US-A- 5 921 084

## Description

L'invention est relative à un dispositif de freinage assisté, pour véhicule à moteur, du type de ceux qui comprennent un maître-cylindre commandant la pression dans au moins un circuit de freinage, un piston primaire monté coulissant dans le maître-cylindre pour y créer une variation de pression, ce piston primaire étant soumis à une force d'actionnement se composant d'une force d'entrée exercée par un organe de commande manuelle et une force d'assistance exercée par un servomoteur d'assistance qui est couplé à l'organe de commande manuelle.

Le servomoteur d'assistance peut être pneumatique et comprendre une enveloppe rigide séparée en deux chambres pneumatiques par une cloison mobile qui peut être soumise à une différence de pression entre les chambres sous l'action d'une valve actionnée par l'organe de commande manuelle.

Un dispositif de freinage de ce type est connu, par exemple d'après EP-B-0 662 894, et US 5 921 084.

Les conditions dans lesquelles le freinage est exercé peuvent différer. Un premier cas correspond à des conditions ordinaires lorsqu'un obstacle est vu de loin et que le freinage est exercé relativement doucement ; ce freinage est appelé "freinage lent". Un autre cas est celui d'un freinage brusque ou "freinage d'urgence", par exemple lorsqu'un obstacle surgit brutalement devant le conducteur qui doit arrêter son véhicule le plus vite possible.

En vue de satisfaire à ces différentes conditions de freinage, un dispositif de freinage assisté, du type défini précédemment, a été complété par une valve d'assistance d'urgence propre à faire intervenir au moins deux rapports d'assistance correspondant respectivement à un freinage lent et à un freinage d'urgence ; le rapport d'assistance pour le freinage lent est plus faible et la réaction opposée à l'avance de l'organe de commande manuelle est plus forte. Pour le freinage d'urgence, le rapport d'assistance est plus fort et la réaction à l'encontre de l'organe de commande manuelle est plus faible, de sorte que le conducteur peut freiner plus longtemps et plus fort.

Par convention, dans la suite du texte on désignera par le terme "avant" un sens orienté depuis l'organe de commande vers le maître-cylindre, et par le terme "arrière" le sens opposé.

La valve d'assistance d'urgence comporte un piston de réaction qui coulisse de manière étanche à l'arrière d'un alésage du piston primaire, la partie avant de cet alésage communiquant avec le volume intérieur du maître-cylindre, le piston de réaction comportant un passage axial traversé par une commande de rapport poussée par un plongeur lui-même entraîné par l'organe de commande manuelle, la commande de rapport comportant à son extrémité avant une tête située dans une chambre comprise entre le piston de réaction et une douille disposée plus en avant dans l'alésage du piston primaire, cette douille comportant un alésage dans lequel peut coulisser un piston rapide de section inférieure à celle du piston de réaction, lequel piston rapide comporte aussi un passage qui débouche à chaque extrémité, l'extrémité arrière du piston rapide et la tête de la commande de rapport formant un clapet apte à fermer l'entrée du passage du piston rapide à l'encontre de l'action d'un ressort qui tend à ouvrir le clapet.

Le rapport d'assistance lent fait intervenir le piston de réaction, de plus forte section ; le freinage d'urgence fait intervenir le piston rapide, de section plus faible.

Il est apparu qu'un tel dispositif de freinage, avec valve d'assistance d'urgence, tout en donnant entière satisfaction au point de vue fonctionnement et effort de freinage, engendre des bruits lorsque l'organe de commande manuelle est relâché.

L'invention a pour but, surtout, de fournir un dispositif de freinage du type défini précédemment, équipé d'une valve d'assistance d'urgence, dans lequel l'inconvénient évoqué ci-dessus ne se produit plus, ou tout au moins n'intervient qu'à un degré moindre.

Il est souhaitable, en outre, que la solution proposée reste simple et économique.

Pour résoudre le problème, les inventeurs ont dû trouver la source des bruits en question. Les inventeurs ont pu établir que ces bruits se produisaient lorsque l'organe de commande manuelle était relâché après un freinage lent au-delà de la force d'assistance maximale que peut fournir le servomoteur, c'est-à-dire au-delà de la "saturation", et qu'ils étaient dus à des chocs du piston de réaction contre le plongeur.

Pour éviter de tels bruits, selon l'invention, un dispositif de freinage assisté pour véhicule à moteur, équipé d'une valve d'assistance d'urgence, du type défini précédemment, est caractérisé par le fait qu'il comporte un moyen pour empêcher un recul brutal du piston de réaction lorsque l'organe de commande manuelle est relâché après un freinage lent.

Le choc du piston de réaction contre le plongeur est ainsi réduit ou même supprimé, de même que le bruit qui l'accompagne. En outre, les pièces sont moins sollicitées et leur durée de vie est augmentée.

De préférence, le moyen pour empêcher un recul brutal du piston de réaction est apte à limiter une augmentation de pression dans la chambre comprise entre le piston de réaction et la douille lors du relâchement de l'organe de commande manuelle.

En particulier, le moyen pour empêcher le recul brutal du piston de réaction est apte à maintenir le clapet fermé, lors du relâchement de l'organe de commande manuelle, et à empêcher une montée de pression dans ladite chambre.

Le moyen apte à maintenir le clapet fermé peut comprendre un circuit hydraulique pour appliquer la pression régnant dans le maître-cylindre sur une partie arrière de la commande de rapport pour exercer une force maintenant le clapet fermé. La section de la partie arrière de la commande de rapport sur laquelle s'exerce la pression est supérieure à la section de fermeture du clapet.

Avantageusement, la commande de rapport est réalisée en deux éléments séparés, un premier élément situé en avant comportant la tête de la commande de rapport et, en arrière de la tête, une partie de plus faible section montée coulissante de manière étanche dans un logement du piston de réaction, ce premier élément étant traversé suivant toute sa longueur par un canal, et un second élément, situé en arrière du premier, à section pleine, monté également coulissant de manière étanche dans un alésage du piston de réaction, ce second élément fermant le logement dans lequel est monté le premier élément et assurant la transmission des efforts entre le premier élément et le plongeur. Le second élément peut être retenu dans le logement du premier élément par un jonc élastique ancré dans une gorge du second élément.

La tête de la commande de rapport prévue à l'extrémité avant du premier élément peut avoir une forme tronconique convexe en saillie vers l'avant, et être munie d'un joint torique déterminant un diamètre de zone d'étanchéité qui est inférieur au diamètre extérieur de la partie arrière de ce premier élément ; l'extrémité en regard du piston rapide présente une surface tronconique concave vers l'arrière contre laquelle vient s'appuyer la tête du premier élément.

La douille peut être bloquée axialement dans l'alésage.

L'invention consiste, mises à part les dispositions exposées ci-dessus, en un certain nombre d'autres dispositions dont il sera plus explicitement question ci-après, à propos d'un exemple de réalisation décrit en détail avec référence aux dessins ci-annexés, mais qui n'est nullement limitatif. Sur ces dessins :
Fig.1 est une vue partielle en coupe avec parties arrachées, d'un dispositif de freinage selon l'invention,
Fig.2 est une vue partielle en coupe, à plus grande échelle, d'éléments de Fig.1 et de la valve d'assistance d'urgence, le dispositif de freinage étant en position de repos ;
Fig.3 montre, semblablement à Fig.2, les éléments en cours de freinage lent après saturation ;
Fig.4, enfin, montre semblablement à Fig.2 les éléments de la valve d'urgence alors que la pédale de frein a été relâchée suite à la phase illustrée par Fig.3

La structure d'ensemble et le fonctionnement général d'un dispositif de freinage assisté du type de l'invention sont connus, notamment d'après les brevets EP-B-0 662 894 ou FR-B-2 658 466, et ne seront que succinctement rappelés. Pour plus de détails, on pourra se reporter aux deux brevets cités.

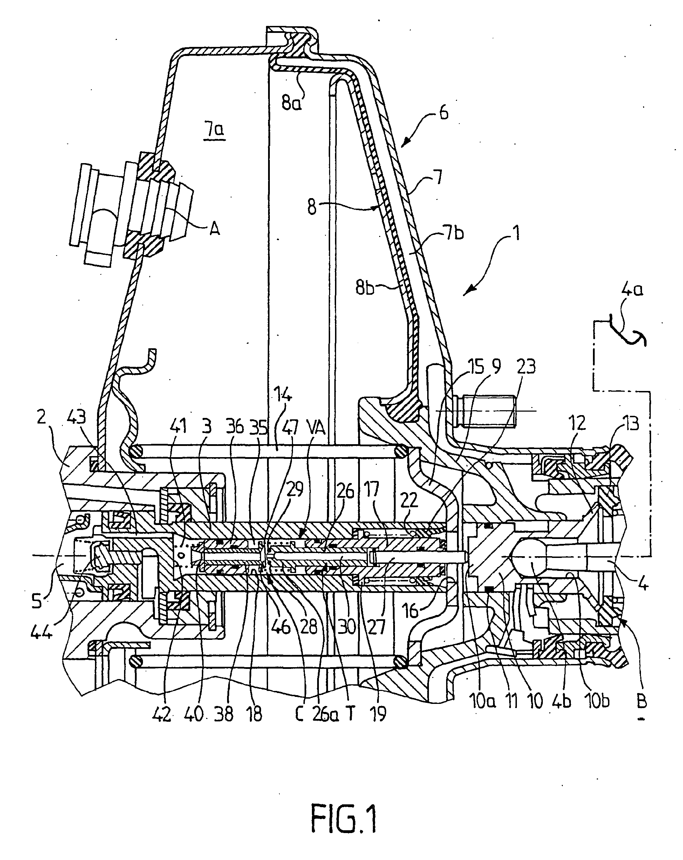

Sur Fig.1, on peut voir un dispositif de freinage 1 pour véhicule automobile qui comprend un maître-cylindre 2 partiellement représenté et un piston primaire 3 monté coulissant dans le maître-cylindre 2. Un organe de commande manuelle 4 comprenant une tringle coaxiale au piston primaire 3 est prévu pour exercer sur ce piston une force d'entrée de l'arrière vers l'avant, c'est-à-dire de la droite vers la gauche selon la représentation de Fig.1. Le déplacement du piston primaire 3 vers l'avant crée une augmentation de pression du liquide dans le volume intérieur 5 du maître-cylindre 2, relié à au moins un circuit hydraulique de freinage. L'organe de commande 4 est généralement actionné par une pédale de frein 4a schématiquement représentée.

Un servomoteur d'assistance 6 pneumatique est couplé à l'organe de commande 4. Le servomoteur 6 comprend une enveloppe rigide 7 séparée intérieurement de manière étanche en deux chambres pneumatiques 7a, 7b par une cloison mobile 8 comprenant une membrane 8a en matière élastomère et une jupe rigide 8b. La chambre 7a est reliée en permanence à une source de dépression (non représentée) par un ajutage A. Un piston pneumatique 9 en forme de manchon coaxial au piston primaire 3 est fixé à la jupe rigide 8b. Le piston pneumatique 9 est monté coulissant, de manière étanche, sur un distributeur plongeur 10, en forme de noyau cylindrique. L'étanchéité est assurée par un joint torique 11. Le plongeur 10 comporte vers l'avant un prolongement 10a de plus faible diamètre et, vers l'arrière, un logement borgne axial 10b, ouvert vers l'arrière, qui reçoit une rotule 4b prévue à l'extrémité de la tringle 4.

Le plongeur 10 comporte, du côté opposé au piston 3, un épanouissement tronconique 12 qui peut venir en appui de manière étanche contre une bague 13 en matière élastomère liée en translation axiale au piston pneumatique 9. L'ensemble 12, 13 constitue une partie d'une valve trois voies B (partiellement représentée) qui permet soit d'isoler la chambre 7b de l'atmosphère et de mettre en communication les chambres 7a, 7b, soit d'isoler les chambres 7a, 7b l'une de l'autre et d'admettre de l'air à pression atmosphérique dans la chambre 7b lorsque l'épanouissement 12 s'écarte axialement de la bague 13.

Le piston pneumatique 9 est rappelé vers sa position de repos, représentée sur Fig.1, par un ressort de compression 14 disposé entre le piston 9 et la paroi opposée de l'enveloppe 7 sur laquelle est fixé le maître-cylindre 2. Une cuvette 15 comportant une ouverture centrale 16 est en appui axial par son bord périphérique extérieur contre un épaulement du piston pneumatique 9. Le ressort 14 applique le bord de cette cuvette contre le piston 9. La cuvette 15 est en appui axial, par le bord intérieur entourant son ouverture 16, contre l'extrémité arrière du piston primaire 3. Le prolongement 10a du plongeur 10 peut traverser librement l'ouverture 16.

Une valve d'assistance d'urgence VA est prévue pour faire intervenir au moins deux rapports d'assistance correspondant respectivement à un freinage lent et à un freinage d'urgence.

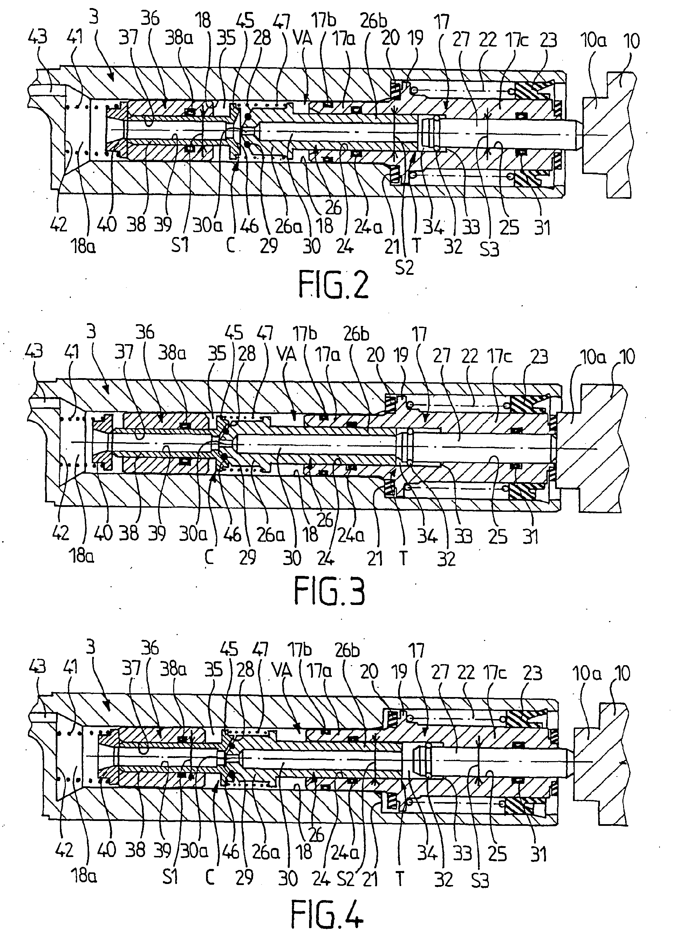

La valve VA comprend un piston de réaction 17 dont une partie avant 17a (Fig.2), de plus faible diamètre, coulisse de manière étanche, grâce à un joint torique 17b, dans un alésage axial 18 du piston primaire 3. La partie arrière 17c du piston de réaction présente un plus fort diamètre et comporte une collerette 19 qui peut coulisser dans une zone arrière de plus grand diamètre de l'alésage 18 du piston primaire 3. Une bague de matière élastomère 20 est disposée contre la collerette 19, du même côté que la partie 17a. Cette bague 20 peut venir en appui axial contre un épaulement 21 du piston primaire 3. De l'autre côté, la collerette 19 sert d'appui axial à un ressort hélicoïdal de compression 22 précontraint, appelé ressort de saut. A son autre extrémité arrière, le ressort 22 est en appui contre une bague clipable 23 en matière plastique, ancrée au piston primaire 3 et dans laquelle coulisse la partie arrière 17c du piston de réaction.

Le piston de réaction 17 est traversé axialement par un passage formé de deux alésages 24, 25 successifs, coaxiaux, de diamètres différents. L'alésage 24 situé en avant a un plus grand diamètre que l'alésage arrière 25, et forme un logement.

Une commande de rapport T est réalisée en deux éléments 26, 27 séparés successifs, et est montée dans le piston 17.

Le premier élément 26 situé en avant comporte, à son extrémité avant, une tête 26a de plus grand diamètre que l'alésage 24. La partie 26b de l'élément 26 située en arrière de la tête 26a, a un diamètre plus faible et une section S2 correspondant à celle de l'alésage 24. Cette partie 26b peut coulisser de manière étanche dans l'alésage 24 grâce à un joint torique 24a logé dans une gorge de l'alésage. L'extrémité avant de la tête 26a présente une surface tronconique convexe 28 en saillie vers l'avant dans laquelle est prévue une gorge centrée sur l'axe, de diamètre inférieur au diamètre extérieur de la tête 26a, munie d'un joint torique 29. L'élément 26 est traversé par un canal axial 30 dont l'extrémité avant 30a présente un diamètre réduit.

L'élément arrière 27 de la commande de rapport T est indépendant de l'élément avant 26. L'élément 27, de section S3, a même diamètre que l'alésage 25 dans lequel il peut coulisser de manière étanche grâce à un joint torique 31 logé dans une gorge de l'alésage 25. L'extrémité avant de l'élément 27 fait saillie dans l'alésage 24 et est munie d'un jonc élastique 32, c'est à dire un anneau ouvert, logé dans une gorge de l'élément 27. Ce jonc 32 est apte à servir de butée contre l'épaulement 33 marquant la transition entre l'alésage 24 et l'alésage 25, pour retenir l'élément 27 dans le piston 17. L'extrémité avant de l'élément 27 se trouve dans un espace 34 compris entre l'extrémité arrière de l'élément 26 et l'épaulement 33. L'extrémité arrière de l'élément 27 est en appui contre le prolongement 10a du plongeur 10. L'élément 27 assure la transmission de l'effort de réaction, créé par la pression sur la section S3, contre le plongeur 10.

La tête 26a du premier élément 26 est située dans une chambre 35 de l'alésage 18 comprise entre le piston de réaction 17 et une douille 36 logée plus en avant dans l'alésage 18. La douille 36 est bloquée axialement relativement au piston primaire 3 par emmanchement à force, ou par des pattes d'ancrage.

La douille 36 est entièrement traversée par un alésage axial 37 dans lequel un piston rapide 38, de section extérieure S1, est monté coulissant de manière étanche, grâce à un joint torique 38a. Le diamètre extérieur du piston rapide 38 est plus petit que celui de la partie avant 17a du piston de réaction. Le piston rapide 38 est traversé axialement par un passage 39 qui débouche à chaque extrémité. L'extrémité avant du piston rapide 38 est en appui contre une bague 40 poussée par un ressort 41 contre la douille 36. Le ressort 41 prend appui, de l'autre côté, contre une paroi de fond 42 située à l'avant de l'alésage 18. La zone avant 18a de l'alésage 18, dans laquelle est logé le ressort 41, communique par un canal 43 avec le volume intérieur 5 du maître-cylindre 2. Le ressort 41 est soumis à une précontrainte inférieure à celle du ressort 22. Un clapet 44 (Fig.1) est en outre prévu pour permettre, lorsque le volume 5 n'est plus sous pression, une réalimentation de ce volume en liquide à partir d'un réservoir (non représenté).

L'extrémité arrière 45 du piston rapide 38 est située dans la chambre 35 et se présente sous forme d'un disque de diamètre supérieur à celui de l'alésage 37. Cette extrémité 45 comporte un évidement tronconique 46 dont la concavité est tournée vers l'arrière, pour coopérer avec la surface tronconique 28 et le joint torique 29 de la tête 26a. Un clapet C est ainsi formé par la tête 26a et le disque 45 qui, lorsqu'ils sont en appui axial, coupent la communication entre la chambre 35 et le passage 39 du piston mobile 38. La section de fermeture du clapet C est équivalente à la section S3 de l'élément 27 de la commande de rapport.

Un ressort de compression 47, coaxial, est disposé entre deux épaulements prévus respectivement sur la tête 26a et sur l'extrémité arrière 45. Ce ressort 47 a tendance à écarter l'extrémité 45 et la tête 26a pour ouvrir le clapet C.

La "saturation" du dispositif de freinage est atteinte lorsque la force d'assistance que peut fournir le servomoteur 6 est devenue maximale, c'est-à-dire lorsque la différence de pression à laquelle est soumise la cloison 8 ne peut plus augmenter.

Ceci étant, le fonctionnement du dispositif de freinage lorsque la pédale de frein est relâchée après freinage lent et dépassement de la saturation est le suivant.

On rappelle le déroulement du freinage lent. L'organe de commande manuelle 4 est déplacé vers la gauche par enfoncement de la pédale 4a. La valve B est actionnée et coupe la communication entre les chambres 7a et 7b, puis l'épanouissement tronconique 12 s'écarte de la bague 13 ce qui assure l'admission d'air à pression atmosphérique dans la chambre 7b du servomoteur 6. La cloison mobile 8 transmet la force d'assistance au piston pneumatique 9 qui se déplace vers l'avant à l'encontre du ressort 14. Le piston 9 entraîne la cuvette 1,5 qui pousse le piston primaire 3 vers l'avant. Le plongeur 10 se déplace également vers l'avant et, par son prolongement 10a, pousse l'élément 27 lequel par son extrémité avant vient en butée contre l'extrémité arrière de l'élément 26 qui est donc poussé par l'élément 27. Le piston primaire 3 et l'ensemble 26-27 formant la commande de rapport T se déplacent vers l'avant, le clapet C restant ouvert.

La pression du liquide dans le volume 5 augmente en raison de l'entrée du piston primaire 3 dans le maître-cylindre 2. Cette augmentation de pression est transmise à la chambre 35, le clapet C étant ouvert. La pression engendre sur le piston de réaction 17 un effort vers l'arrière. Lorsque cet effort atteint et dépasse la précontrainte du ressort 22, le piston de réaction 17 recule jusqu'à venir en butée contre le prolongement 10a ce qui correspond à la phase appelée "saut". Dans cette configuration (non représentée sur les dessins) l'épaulement 19 et la bague 20 sont situés à distance de l'épaulement 21, en arrière.

Sous l'action de la force d'entrée sur l'organe 4, le plongeur 10 continue son déplacement vers l'avant ; le piston pneumatique 9 suit le plongeur 10 et pousse le piston primaire 3 avec la force d'assistance. La pression du liquide dans le volume 5 continue à augmenter, ainsi que dans la chambre 35.

Lorsque la différence de pression entre les chambres 7b et 7a du servomoteur 6 atteint sa valeur maximale, le servomoteur 6 produit son effort maximal qui correspond à la " saturation ". Une augmentation de l'effort de freinage ne peut alors être obtenue que par une augmentation de la force d'entrée sur l'organe 4. Le piston primaire 3 marque un bref temps d'arrêt car la force exercée vers l'arrière par la pression de liquide, sur ce piston 3, équilibre la force d'assistance du servomoteur 6.

L'organe de commande 4 continuant à avancer sous l'action de la force manuelle, la commande de rapport T avance relativement au piston primaire 3. L'élément 27 pousse l'élément 26 de sorte que la tête 26a s'applique de manière étanche par son joint 29 contre le siège 46. Le clapet C est alors fermé. Le piston rapide 38 est poussé vers l'avant par la tête 26a, et repousse lui-même la bague 40 qui s'écarte de la douille 36, à l'encontre du ressort 41. Le piston de réaction 17, poussé par le plongeur 10 contre lequel il est en appui, avance également relativement au piston primaire 3 jusqu'à ce que la bague 20 vienne en butée contre l'épaulement 21 comme illustré sur Fig.3. La force d'entrée sur l'organe de commande 4 permet d'entraîner, par l'intermédiaire du piston de réaction 17, le piston primaire 3 et d'assurer l'augmentation de la pression de freinage au-delà de la saturation.

Après cette phase de freinage lent au-delà de la saturation, lorsque la pédale de frein 4a est relâchée, l'organe de commande 4 et le plongeur 10 reculent, c'est-à-dire se déplacent vers la droite selon la représentation des dessins, sous l'action de la pression hydraulique. Le piston primaire 3 recule également, mais les déplacements du piston 3 ne sont pas représentés sur les Figs.2 à 4, par simplification.

Le piston rapide 38, qui s'était avancé par rapport à la douille 36, suit le mouvement de recul (voir Fig.4), de même que l'élément 26 sous l'effet de la pression qui règne dans la chambre 41 et qui est appliquée à la section S1 du piston rapide 38. Le piston de réaction 17 subit un faible déplacement vers l'arrière, sous l'effet de la pression résiduelle emprisonnée dans la chambre 35, jusqu'à une position d'équilibre entre l'effet de cette pression résiduelle et l'effort du ressort 22 ; l'extrémité arrière du piston 17 perd le contact avec le prolongement 10a du plongeur 10 qui recule davantage que le piston 17 (Fig.4).

La pression dans le maître cylindre et dans la chambre 41 diminue au fur et à mesure que le piston primaire 3 se déplace vers l'arrière. Toutefois, la pression dans la chambre 41 reste supérieure à celle régnant dans la chambre 35 isolée par le clapet C fermé.

A partir d'une certaine valeur de la pression dans la chambre 41, supérieure à la pression dans la chambre 35, l'effort du ressort 47 du clapet C devient prépondérant et pourrait ouvrir le clapet C en l'absence de la disposition de l'invention. Une telle ouverture engendrerait une montée brutale en pression dans la chambre 35 et un recul brusque du piston de réaction 17 qui viendrait heurter le prolongement 10a du plongeur 10 avec bruit de choc.

La disposition de l'invention permet d'éviter ce bruit.

En effet, la pression régnant dans la chambre 41 est transmise par les passages 39 et 30 à l'espace 34. L'application de cette pression à l'arrière de l'élément 26 suivant la section S2 supérieure à la section de fermeture du clapet C permet de contrarier l'effort du ressort 47 et de maintenir le clapet C fermé jusqu'à une valeur relativement faible de la pression dans la chambre 41.

Lorsque l'ouverture du clapet C se produit, la pression dans la chambre 41, transmise à la chambre 35, est faible et le piston de réaction 17 n'est pas repoussé violemment contre le plongeur 10. La valeur de cette pression peut même être suffisamment faible pour ne pas créer sur le piston 17 une force supérieure à celle du ressort 22 de sorte que le piston 17 n'est pas repoussé.

Ainsi, le moyen formé par les éléments 26,27, le passage 30 et l'espace 34, empêche un recul brutal du piston de réaction 17, en limitant l'augmentation de pression dans la chambre 35. La protection revendiquée englobe bien entendu tout moyen équivalent à celui décrit.

## Revendications

1. Dispositif de freinage assisté, pour véhicule à moteur, comprenant un maître-cylindre (2) commandant la pression dans au moins un circuit de freinage, un piston primaire (3) monté coulissant dans le maître-cylindre pour y créer une variation de pression, ce piston primaire étant soumis à une force d'actionnement se composant d'une force d'entrée exercée par un organe de commande manuelle (4) et une force d'assistance exercée par un servomoteur d'assistance (6) qui est couplé à l'organe de commande manuelle (4), et une valve d'assistance d'urgence (VA) qui comporte un piston de réaction (17) coulissant de manière étanche à l'arrière d'un alésage (18) du piston primaire, la partie avant (18a) de cet alésage communiquant avec le volume intérieur (5) du maître-cylindre, le piston de réaction (17) comportant un passage axial (24,25) traversé par une commande de rapport (T) poussée par un plongeur (10) lui-même entraîné par l'organe de commande manuelle (4), la commande de rapport (T) comportant à son extrémité avant une tête (26a) située dans une chambre (35) comprise entre le piston de réaction (17) et une douille (36) disposée plus en avant dans l'alésage du piston primaire, cette douille (36) comportant un alésage (37) dans lequel peut coulisser un piston rapide (38) de section inférieure à celle du piston de réaction (17), lequel piston rapide (38) comporte aussi un passage (39) qui débouche à chaque extrémité, l'extrémité arrière (45) du piston rapide et la tête (26a) de la commande de rapport formant un clapet (C) apte à fermer l'entrée du passage (39) du piston rapide à l'encontre de l'action d'un ressort (41) qui tend à ouvrir le clapet,
**caractérisé par le fait qu'**il comporte un moyen (26, 27, 30, 34) pour empêcher un recul brutal du piston de réaction (17) lorsque l'organe de commande manuelle (4) est relâché après un freinage lent.

2. Dispositif de freinage selon la revendication 1, **caractérisé par le fait que** le moyen (26, 27, 30, 34) pour empêcher un recul brutal du piston de réaction est apte à limiter une augmentation de pression dans la chambre (35) comprise entre le piston de réaction (17) et la douille (36) lors du relâchement de l'organe de commande manuelle.

3. Dispositif de freinage selon la revendication 1 ou 2, **caractérisé par le fait que** le moyen (26, 27, 30, 34) pour empêcher le recul brutal du piston de réaction est apte à maintenir le clapet (C) fermé, lors du relâchement de l'organe de commande manuelle (4), et à empêcher une montée de pression dans ladite chambre (35).

4. Dispositif de freinage selon la revendication 3, **caractérisé par le fait que** le moyen apte à maintenir le clapet (C) fermé comprend un circuit hydraulique (30, 34) pour appliquer la pression régnant dans le maître-cylindre (5) sur une partie arrière (26b) de la commande de rapport (T) pour exercer une force maintenant le clapet fermé.

5. Dispositif de freinage selon la revendication 4, **caractérisé par le fait que** la section (S2) de la partie arrière (26b) de la commande de rapport (T) sur laquelle s'exerce la pression est supérieure à la section de fermeture du clapet (C).

6. Dispositif de freinage selon la revendication 4 ou 5, **caractérisé par le fait que** la commande de rapport (T) est réalisée en deux éléments séparés (26,27), un premier élément (26) situé en avant comportant la tête de la commande de rapport (26a) et, en arrière de la tête, une partie (26b) de plus faible section montée coulissante de manière étanche dans un logement (24) du piston de réaction, ce premier élément (26) étant traversé suivant toute sa longueur par un canal (30), et un second élément (27), situé en arrière du premier, à section pleine, monté également coulissant de manière étanche dans un alésage (25) du piston de réaction, ce second élément (27) fermant le logement (24) dans lequel est monté le premier élément (26) et assurant la transmission des efforts entre le premier élément (26) et le plongeur (10).

7. Dispositif de freinage selon la revendication 6, **caractérisé par le fait que** le second élément (27) est retenu dans le logement du premier élément (26) par un jonc (32) ancré dans une gorge du second élément (27).

8. Dispositif de freinage selon la revendication 6 ou 7, **caractérisé par le fait que** la tête de la commande de rapport (26a) prévue à l'extrémité avant du premier élément a une forme tronconique convexe en saillie vers l'avant, et est munie d'un joint torique (29) déterminant un diamètre de zone d'étanchéité qui est inférieur au diamètre extérieur de la partie arrière (26b) de ce premier élément.

9. Dispositif de freinage selon la revendication 8, **caractérisé par le fait que** l'extrémité (45) du piston rapide en regard de la tête (26a) présente une surface tronconique (46) concave vers l'arrière contre laquelle peut venir s'appuyer la tête (26a) du premier élément.

10. Dispositif de freinage selon l'une des revendications précédentes, **caractérisé par le fait que** la douille (36) est bloquée axialement dans l'alésage (18).

## Claims

1. Boosted braking device for a motor vehicle, comprising a master cylinder (2) controlling the pressure in at least one braking circuit, a primary piston (3) mounted to slide in the master cylinder to create a pressure variation therein, this primary piston being subjected to an actuating force made up of an input force exerted by a manual control member (4) and a boost force exerted by a booster (6) which is coupled to the manual control member (4), and an emergency assist valve (VA) which comprises a reaction piston (17) sliding in sealed manner at the rear of a bore (18) of the primary piston, the front part (18a) of this bore communicating with the interior volume (5) of the master cylinder, the reaction piston (17) having an axial passage (24, 25) through which there passes a ratio control (T) pushed by a plunger (10) itself driven by the manual control member (4), the ratio control (T) at its front end comprising a head (26a) situated in a chamber (35) lying between the reaction piston (17) and a bushing (36) arranged further forward in the bore of the primary piston, this bushing (36) having a bore (37) in which a rapid piston (38) of smaller cross section than the reaction piston (17) can slide, which rapid piston (38) also has a passage (39) open at each end, the rear end (45) of the rapid piston and the head (26a) of the ratio control forming a valve (C) capable of closing the inlet to the passage (39) in the rapid piston against the action of a spring (41) which tends to open the valve,
**characterized in that** it comprises a means (26, 27, 30, 34) for preventing a sharp retreat of the reaction piston (17) when the manual control member (4) is released after slow braking.

2. Braking device according to Claim 1, **characterized in that** the means (26, 27, 30, 34) for preventing a sharp retreat of the reaction piston is capable of limiting an increase in pressure in the chamber (35) lying between the reaction piston (17) and the bushing (36) when the manual control member is released.

3. Braking device according to Claim 1 or 2, **characterized in that** the means (26, 27, 30, 34) for preventing the sharp retreat of the reaction piston is capable of keeping the valve (C) closed while the manual control member (4) is being released, and of preventing a rise in pressure in the said chamber (35).

4. Braking device according to Claim 3, **characterized in that** the means capable of keeping the valve (C) closed comprises a hydraulic circuit (30, 34) for applying the pressure obtaining in the master cylinder (5) to a rear part (26b) of the ratio control (T) so as to exert a force keeping the valve closed.

5. Braking device according to Claim 4, **characterized in that** the cross section (S2) of the rear part (26b) of the ratio control (T) on which the pressure is exerted is greater than the cross section for closure of the valve (C).

6. Braking device according to Claim 4 or 5, **characterized in that** the ratio control (T) is made of two separate elements (26, 27), a first element (26) located forward comprising the head of the ratio control (26a) and, to the rear of the head, a part (26b) of smaller cross section mounted to slide in sealed manner in a housing (24) in the reaction piston, this first element (26) having a duct (30) passing through it along its entire length, and a second element (27), situated to the rear of the first, of solid cross section, also mounted to slide in sealed manner in a bore (25) in the reaction piston, this second element (27) closing the housing (24) in which the first element (26) is mounted and transmitting loads between the first element (26) and the plunger (10).

7. Braking device according to Claim 6, **characterized in that** the second element (27) is held in the housing of the first element (26) by a snap ring (32) anchored in a groove in the second element (27).

8. Braking device according to Claim 6 or 7, **characterized in that** the head of the ratio control (26a) provided at the front end of the first element has a convex frustoconical shape projecting forward, and is fitted with an O-ring (29) determining a diameter of the sealing zone which is smaller than the outside diameter of the rear part (26b) of this first element.

9. Braking device according to Claim 8, **characterized in that** the end (45) of the rapid piston facing the head (26a) has a frustoconical surface (46) which is concave toward the rear and against which the head (26a) of the first element can come to bear.

10. Braking device according to one of the preceding claims, **characterized in that** the bushing (36) is axially immobilized in the bore (18).

## Patentansprüche

1. Vorrichtung für eine unterstützte Bremsung für ein Kraftfahrzeug, mit einem Hauptzylinder (2), der den Druck in mindestens einem Bremskreis steuert, einem Primärkolben (3), der im Hauptzylinder gleitend angebracht ist, um dort eine Druckänderung zu erzeugen, wobei dieser Primärkolben einer Betätigungskraft ausgesetzt ist, die sich aus einer Eingangskraft, die von einem Organ (4) zur manuellen Steuerung ausgeübt wird, und einer Unterstützungskraft zusammensetzt, die von einem an das Organ (4) zur manuellen Steuerung gekoppelten Unterstützungsservomotor (6) ausgeübt wird, und mit einem Unterstützungsnotventil (VA), das einen Reaktionskolben (17) aufweist, der in dichter Weise im hinteren Teil einer Bohrung (18) des Primärkolbens gleitet, wobei der vordere Teil (18a) dieser Bohrung mit dem Innenvolumen (5) des Hauptzylinders verbunden ist, wobei der Reaktionskolben (17) einen axialen Durchgang (24, 25) aufweist, durch den eine Verhältnissteuerung (T) verläuft, die von einem Tauchkolben (10) gedrückt wird, welcher selbst von dem Organ (4) zur manuellen Steuerung angetrieben wird, wobei die Verhältnissteuerung (T) an ihrem vorderen Ende einen Kopf (26a) aufweist, der in einer Kammer (35) liegt, die zwischen dem Reaktionskolben (17) und einer Hülse (36) ausgebildet ist, welche weiter vorne in der Bohrung des Primärkolbens angeordnet ist, wobei diese Hülse (36) eine Bohrung (37) aufweist, in der ein schneller Kolben (38) gleiten kann, dessen Querschnitt kleiner ist als der des Reaktionskolbens (17), wobei der schnelle Kolben (38) auch einen Durchgang (39) aufweist, der an jedem Ende mündet, wobei das hintere Ende (45) des schnellen Kolbens und der Kopf (26a) der Verhältnissteuerung ein Ventilelement (C) bilden, das den Eingang des Durchgangs (39) des schnellen Kolbens entgegen der Wirkung einer Feder (41), die dazu neigt, das Ventilelement zu öffnen, verschließen kann, **dadurch gekennzeichnet, dass** sie ein Mittel (26, 27, 30 34) aufweist, um eine abrupte Rückbewegung des Reaktionskolbens (17) zu verhindern, wenn das Organ (4) zur manuellen Steuerung nach einer langsamen Bremsung losgelassen wird.

2. Bremsvorrichtung nach Anspruch 1, **dadurch gekennzeichnet, dass** das Mittel (26, 27, 30, 34) zur Verhinderung einer abrupten Rückbewegung des Reaktionskolbens eine Druckerhöhung in der zwischen dem Reaktionskolben (17) und der Hülse (36) ausgebildeten Kammer (35) begrenzen kann, wenn das Organ zur manuellen Steuerung losgelassen wird.

3. Bremsvorrichtung nach Anspruch 1 oder 2, **dadurch gekennzeichnet, dass** das Mittel (26, 27, 30, 34) zur Verhinderung der abrupten Rückbewegung des Reaktionskolbens das Ventilelement (C) beim Loslassen des Organs (4) zur manuellen Steuerung geschlossen halten und einen Druckanstieg in der Kammer (35) verhindern kann.

4. Bremsvorrichtung nach Anspruch 3, **dadurch gekennzeichnet, dass** das Mittel, welches das Ventilelement (C) geschlossen halten kann, einen hydraulischen Kreis (30, 34) aufweist, um den im Hauptzylinder (5) herrschenden Druck auf einen hinteren Teil (26b) der Verhältnissteuerung (T) aufzubringen und eine Kraft auszuüben, die das Ventilelement geschlossen hält.

5. Bremsvorrichtung nach Anspruch 4, **dadurch gekennzeichnet, dass** der Querschnitt (S2) des hinteren Teils (26b) der Verhältnissteuerung (T), auf dem der Druck aufgebracht wird, größer ist als der Schließquerschnitt des Ventilelements (C).

6. Bremsvorrichtung nach Anspruch 4 oder 5, **dadurch gekennzeichnet, dass** die Verhältnissteuerung (T) aus zwei getrennten Elementen (26, 27) gebildet ist, aus einem im vorderen Teil angeordneten ersten Element (26), das den Kopf (26a) der Verhältnissteuerung und im hinteren Teil des Kopfes einen Abschnitt (26b) mit kleinerem Querschnitt aufweist, welcher in dichter Weise gleitend in einer Aufnahme (24) des Reaktionskolbens angebracht ist, wobei dieses erste Element (26) über seine gesamte Länge von einem Kanal (30) durchquert ist, und aus einem hinter dem ersten Element angeordneten zweiten Element (27) mit massivem Querschnitt, das auch in dichter Weise gleitend in einer Bohrung (25) des Reaktionskolbens angebracht ist, wobei dieses zweite Element (27) die Aufnahme (24) verschließt, in der das erste Element (26) angebracht ist, und die Kraftübertragung zwischen dem ersten Element (26) und dem Tauchkolben (10) gewährleistet.

7. Bremsvorrichtung nach Anspruch 6, **dadurch gekennzeichnet, dass** das zweite Element (27) durch einen Ring (32), der in einer Nut des zweiten Elements (27) verankert ist, in der Aufnahme des ersten Elements (26) gehalten ist.

8. Bremsvorrichtung nach Anspruch 6 oder 7, **dadurch gekennzeichnet, dass** der Kopf (26a) der Verhältnissteuerung, der am vorderen Ende des ersten Elements vorgesehen ist, eine kegelstumpfartige, konvexe, nach vorne vorstehende Form hat und mit einer torischen Dichtung (29) versehen ist, die einen Durchmesser eines Dichtungsbereichs bestimmt, der kleiner ist als der Außendurchmesser des hinteren Abschnitts (26b) dieses ersten Elements.

9. Bremsvorrichtung nach Anspruch 8, **dadurch gekennzeichnet, dass** das Ende (45) des schnellen Kolbens, das dem Kopf (26a) gegenüberliegt, eine kegelstumpfartige, nach hinten konkave Fläche (46) aufweist, an der sich der Kopf (26a) des ersten Elements abstützen kann.

10. Bremsvorrichtung nach einem der vorhergehenden Ansprüche, **dadurch gekennzeichnet, dass** die Hülse (36) in der Bohrung (18) axial blockiert ist.
